# FASCICULE DE BREVET EUROPEEN

(11) **EP 1 572 521 B1**
(45) Date de publication et mention de la délivrance du brevet: **23.08.2006**
(21) Numéro de dépôt: 03765137.9
(22) Date de dépôt: 09.07.2003
(51) Int. Cl.: B62D 5/06

(54) **SYSTEME DE DIRECTION DE VEHICULE**
FAHRZEUGLENKSYSTEM
VEHICLE STEERING SYSTEM

(30) Priorité: 18.07.2002 FR 0209146
(43) Date de publication de la demande: 14.09.2005
(73) Titulaire: RENAULT TRUCKS, 69800 St Priest (FR)
(72) Inventeur: RANC, Fabrice, F-69360 SIMANDRES (FR); DELACHAT, Valérie, F-69330 MEYZIEU (FR); CARNEIRO-ESTEVES, Armando, F-69300 CALUIRE (FR)
(74) Mandataire: Vuillermoz, Bruno
(86) Numéro de dépôt international: PCT/FR2003/002136
(87) Numéro de publication internationale: WO 2004/009425

(56) Documents cités:
- DE-A- 10 037 829
- DE-A- 10 040 870
- DE-A- 10 135 862
- US-B1- 6 279 675
- US-B1- 6 354 393

## Description

### Domaine technique :

L'invention se rattache au domaine des systèmes de commande de direction équipant les véhicules automobiles, et notamment les véhicules industriels, tels que les camions.

Elle concerne plus spécifiquement les systèmes de direction dans lesquels le braquage des roues n'est pas obtenu par une transmission mécanique, mais par le biais d'un dispositif mettant en oeuvre des circuits hydrauliques, électro-hydrauliques ou électriques. Ce type de direction est connu sous l'appellation "Steer by Wire". L'invention concerne plus spécifiquement une architecture du système de direction permettant entre autres d'assurer un niveau élevé de sûreté de fonctionnement.

### Techniques antérieures :

De façon générale, les systèmes de direction dits "Steer by Wire" agissent sur l'angle de braquage des roues au moyen d'un ou plusieurs actionneurs commandés en fonction de la position angulaire du volant. Ces actionneurs peuvent être électriques et commandés par un circuit électrique. De façon plus fréquente, les actionneurs sont de type hydraulique, et commandés par des circuits hydrauliques ou électro-hydrauliques.

Compte tenu du fait que la commande de direction doit être assurée sans défaillance, certaines solutions ont été proposées pour augmenter la fiabilité des systèmes de direction du type "Steer by Wire".

Ainsi, on a proposé dans le document FR 2 784 072, d'équiper le système de direction d'un double circuit de commande. Plus précisément, un premier circuit électro-hydraulique agit en mode normal pour commander l'angle de braquage des roues. Un second circuit, inactif en mode normal, est prévu pour être utilisé en cas de défaillance du premier circuit. Plus précisément, lorsque le circuit principal est défaillant, son action est neutralisée, par exemple en by-passant le vérin formant l'actionneur, c'est-à-dire en reliant les deux chambres de ces vérins. C'est alors le circuit de secours, qui peut être soit hydraulique soit électro-hydraulique, qui agit sur un second actionneur.

Ce type de système présente certains avantages en terme de fiabilité, mais comporte toutefois de multiples inconvénients. Ainsi, le circuit principal, fonctionnant en mode normal, doit assurer à lui seul tous les efforts nécessaires pour obtenir le braquage des roues. Cela induit des conséquences sur son dimensionnement, c'est-à-dire sur le poids et l'encombrement d'un tel circuit.

En outre, en mode normal, c'est-à-dire l'extrême majorité du temps, le second circuit de secours est complètement inactif, et aucun test n'est prévu pour garantir le bon fonctionnement de ses composants. Autrement dit, si le second circuit de secours est lui-même défaillant, ce défaut peut n'apparaître qu'au moment où le circuit principal est lui-même défaillant, avec des risques importants sur la sécurité.

Par ailleurs, lorsque le circuit principal devient défaillant, et que le circuit de secours le supplante, on observe un mode transitoire qui peut perturber le conducteur, et provoquer la perte de contrôle du véhicule. En effet, entre le moment où le circuit principal est désactivé, et le moment où le circuit secondaire peut assurer la commande de la direction de façon convenable, il peut se passer quelques instants pendant lesquels la direction n'est pas correctement assurée, avec des risques de perturbation du conducteur qui ne ressent pas, au niveau du volant, l'action de ses mouvements sur la trajectoire du véhicule.

Par ailleurs, le Demandeur a décrit dans les documents FR 2 804 647 et FR 2 810 615, des systèmes de direction qui incluent deux circuits différents, agissant chacun sur une roue. On conçoit que ce type de système présente des inconvénients, puisque dans le cas d'une défaillance d'un des circuits, il est nécessaire de prévoir des moyens de couplage du braquage des deux roues, qui s'avèrent complexes mécaniquement.

Le document DE-A-100 37 829 décrit un système de direction, assurant la commande de l'angle de braquage des roues directrices par l'intermédiaire de deux circuits électro-hydrauliques commandant chacun un actionneur agissant sur l'angle de braquage, en fonction de la position angulaire du volant. L'emploi de deux circuits hydrauliques indépendants permet de basculer d'un circuit à l'autre en cas de défaillance de l'un des deux. Dans certains cas, ce document envisage également un fonctionnement simultané des deux circuits.

Un premier problème que se propose de résoudre l'invention est celui de permettre le contrôle régulier des circuits de commande intervenant dans le système de direction.

Un autre problème que cherche à résoudre l'invention est celui de l'existence de phases transitoires que l'on observe lors du passage d'un circuit de commande principal à un circuit de secours.

Un autre objectif de l'invention est d'optimiser le dimensionnement des composants intervenant dans le système de direction.

### Exposé de l'invention :

L'invention concerne donc un système de direction, assurant la commande de de l'angle de braquage des roues directrices d'un véhicule, comportant :
- des moyens de détermination de la position angulaire du volant ;
- deux circuits hydrauliques ou électro-hydrauliques permettant de commander chacun un actionneur agissant sur l'angle de braquage des roues , en fonction de la position angulaire du volant ;
- des moyens pour, en mode normal, faire fonctionner simultanément les deux circuits hydrauliques ou électro-hydrauliques ;
caractérisé en ce qu'il comporte également des moyens pour désactiver temporairement à la demande et notamment en roulage l'un ou l'autre des deux circuits hydrauliques ou électro-hydrauliques pour réaliser des opérations de tests et vérifier le bon fonctionnement de chacun desdits circuits.

Autrement dit, l'invention consiste à utiliser deux circuits fonctionnant simultanément en mode normal, et superposant leurs actions. Les deux circuits agissent simultanément sur l'essieu ou le mécanisme de braquage des roues, de sorte que les efforts à produire correspondent sensiblement à la moitié des efforts que doit exercer un système fonctionnant de façon principale en mode normal.

Lorsque l'un des deux circuits est défaillant, l'autre circuit assure une prestation de secours. Du fait du fonctionnement en superposition, le second circuit de secours, qui peut être indifféremment l'un ou l'autre des circuits, est déjà actif au moment de la défaillance de l'autre circuit. De la sorte, la transition entre le mode normal et le mode de secours est instantanée, ce qui se traduit par une continuité au niveau de la conduite, notamment en ce qui concerne les sensations du conducteur par rapport à son volant.

En outre, grâce à la possibilité de désactiver temporairement à la demande l'un des deux circuits, il est possible d'effectuer des tests à tous moments, et notamment de façon périodique et en roulage. Il est ainsi possible de détecter une éventuelle défaillance d'un des composants d'un des circuits, et de provoquer alors le passage en mode secours.

En pratique, le système de direction peut comporter soit deux circuits électro-hydrauliques, soit encore un circuit hydraulique et un circuit électro-hydraulique.

Dans le cas d'un double circuit électro-hydraulique, on préfèrera que chaque circuit soit équipé d'un calculateur de régulation propre, alimenté chacun par sa propre source d'énergie dédiée, et ce afin d'améliorer la fiabilité de l'ensemble.

En pratique, les deux actionneurs commandés chacun par un circuit seront asservis de façon différente, l'un étant asservi en déplacement, et l'autre étant asservi en effort. En effet, les deux actionneurs agissant sur les deux roues qui sont couplées mécaniquement, un des actionneurs est commandé pour obtenir le déplacement nécessaire du mécanisme de braquage. L'autre actionneur est commandé de telle sorte qu'il fournit l'effort nécessaire pour obtenir le déplacement du mécanisme de braquage.

Avantageusement, en pratique, les deux actionneurs sont dimensionnés de façon analogue, ce qui leur permet à chacun de foumir sensiblement la moitié des efforts nécessaires pour obtenir le braquage.

En pratique, les actionneurs peuvent être du type hydraulique, et réalisés sous forme soit de deux vérins double chambre, soit encore d'un seul et unique vérin à quatre chambres.

Ainsi, dans le cas d'actionneur hydraulique, le circuit hydraulique peut comporter une valve de dérivation, ou valve de by-pass, permettant la mise en communication des deux chambres d'un même vérin, lorsque l'on souhaite désactiver le circuit considéré. Dans cette configuration, le vérin ne produit alors aucun effort, et est donc inactif.

Les actionneurs peuvent également être du type à commande électrique et être ainsi désactivés par une absence de commande, ou bien encore une coupure du circuit électrique de commande par l'intermédiaire d'un relais, ou de tout autre composant analogue et notamment des interrupteurs statiques.

### Description sommaire des figures

La manière de réaliser l'invention, ainsi que les avantages qui en découlent ressortiront bien de la description des modes de réalisation qui suivent, à l'appui des figures annexées dans lesquelles :
La figure 1 est une vue schématique et globale d'un système de direction du type "Steer by Wire".
La figure 2 est un schéma électro-hydraulique montrant le fonctionnement d'un mode de réalisation de l'invention, fonctionnant avec le circuit électro-hydraulique.
La figure 3 est un schéma électro-hydraulique montrant le fonctionnement de l'invention dans un mode de réalisation incluant un circuit hydraulique et un circuit électro-hydraulique.

### Manière de réaliser l'invention

Comme évoqué, l'invention concerne un système de direction du type "Steer by Wire", c'est-à-dire dans lequel le braquage des roues n'est pas obtenu par l'intermédiaire d'une colonne de direction classique, mais au moyen de circuits électriques ou préférentiellement électro-hydrauliques et hydrauliques, commandés à partir de la position angulaire du volant.

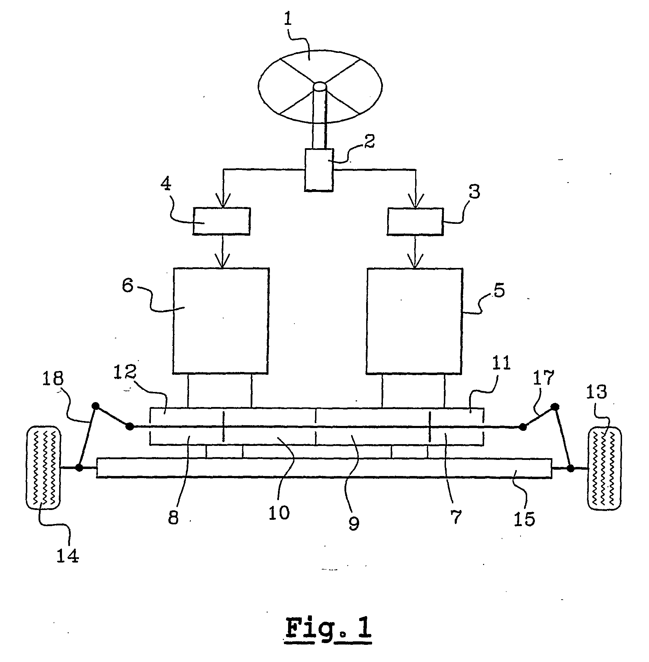

Plus précisément, comme illustré à la figure 1, le système de direction comporte un volant (1) dont l'angle de rotation peut être déterminé par un capteur (2) qui délivre l'information de rotation à destination de deux calculateurs électroniques (3,4), eux-mêmes agissant sur des circuits hydrauliques ou électro-hydrauliques (5,6). Ces différents circuits (5,6) délivrent des débits et pressions de fluide à destination de vérins, représentés à la figure 1 comme un vérin unique (11) à quatre chambres (7-10). Ce vérin (11) agit par l'intermédiaire d'un mécanisme (17,18) connu par ailleurs pour permettre la modification de l'angle des roues (13,14) par rapport à l'essieu directeur (15).

Différentes architectures peuvent être employées tout en restant dans l'esprit de l'invention.

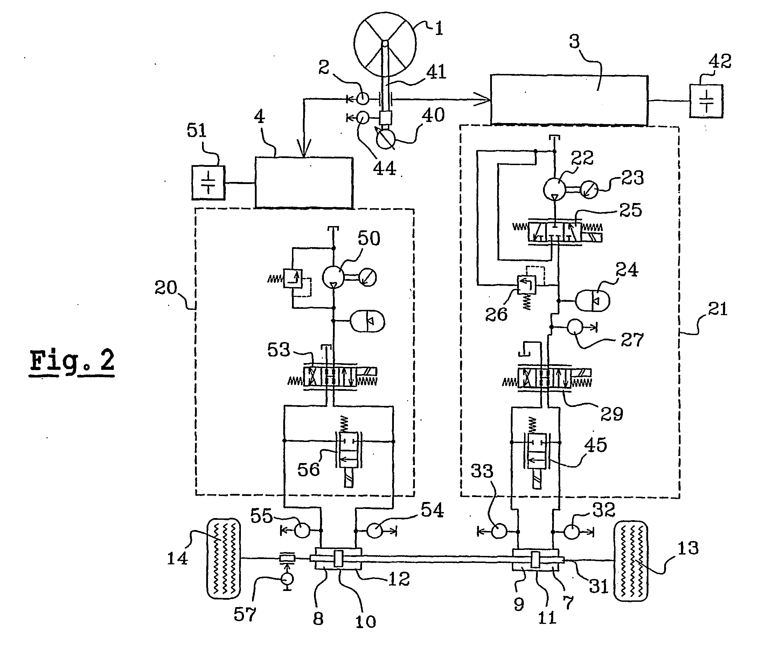

Ainsi, et comme illustré à la figure 2, le volant (1) comprend au moins un, et préférentiellement deux ou trois, capteurs de rotation permettant de déterminer l'angle de rotation du volant (1).

Cette information de rotation du volant est acheminée à destination de deux calculateurs (3,4) responsables chacun de la gestion d'un des circuits de direction. Ces informations peuvent transiter soit par liaison filaire spécifique, soit par l'intermédiaire d'un bus de communication ou tout autre média de communication adapté, entre les différents calculateurs présents au sein du véhicule.

Comme illustré à la figure 2, le système de direction comporte deux circuits (20,21) électro-hydrauliques sensiblement identiques.

Le premier circuit (21) comporte une pompe (22) entraînée à titre d'exemple par le moteur thermique principal (23) du véhicule. Cette pompe (22) délivre une pression à destination d'un accumulateur (24). Une électrovalve (25) est prévue en sortie de la pompe pour permettre le rebouclage de la pompe (22) sur elle-même, afin d'éviter des montées en température du fluide lorsque la consommation en fluide du circuit de direction n'est pas suffisante. Un limitateur (26) peut également être prévu pour éviter des surpressions.

En aval de l'accumulateur (24), le circuit de direction (21) comporte un capteur de pression (27), destiné à permettre la régulation optimale de la fourniture de puissance La pression ainsi délivrée parvient à une valve de distribution (29), elle-même également commandée par le calculateur associé (3). En fonction de la position de la valve proportionnelle (29), les chambres (9,7) du vérin double effet (11) sont alimentés de façon appropriée. Deux vérins identiques sont montés sur l'essieu, chacun entre un point d'articulation fixe sur cet essieu (15) et les bras de manoeuvre (17,18) des fusées sur lesquelles sont montées les roues (13,14). Ces bras de manoeuvre (17,18) sont reliés aux tiges (31) des vérins par des liaisons rigides. Ainsi, l'élongation des tiges (31) des vérins (11) détermine les angles de braquage des roues.

Différents capteurs de pression (32,33) permettent d'élaborer un signal représentatif du couple appliqué aux roues.

Cette information du couple exercé sur les roues peut être utilisée pour commander un variateur d'efforts (40), agissant sur l'arbre (41) du volant (1). Le couple appliqué par le variateur d'efforts (40) permet au conducteur de ressentir sur son volant un couple représentatif des forces de frottement et de rappel qu'il éprouve lorsqu'il manoeuvre le volant d'un dispositif de direction classique, et ainsi recréer une image du contact pneu-chaussée. La régulation de ce couple s'effectue grâce au capteur de couple (44).

Par ailleurs, le circuit de direction (21) comporte une valve (45) disposée entre les deux chambres (9,7) du vérin (11). En mode normal, cette vanne (45) est fermée, permettant l'alimentation indépendante de chacune des chambres (7,9). A l'inverse, cette vanne (45) peut être ouverte pour mettre en communication les deux chambres (7,9) du vérin (11), et rendre donc la commande hydraulique inactive.

Le second circuit de commande (20) de la direction est semblable au premier, à l'exception, dans la forme illustrée à la figure 2, de l'alimentation de puissance. Ainsi, la pression peut être délivrée par une pompe (50) pilotée à la demande, et non pas par le moteur thermique comme pour le premier circuit (21). Le moteur électrique peut tirer son énergie d'une source électrique tel qu'un alternateur, entraîné lui-même par le moteur thermique, et assisté par une batterie en cas d'arrêt du moteur. Dans ces conditions, la vanne (25) permettant le rebouclage de la pompe sur elle-même n'est pas nécessaire puisque la pompe (50) est pilotée à la demande.

Le reste du circuit électro-hydraulique est identique, et contient donc une valve de distribution (53) permettant l'alimentation des deux chambres (8,10) des vérins ainsi que des capteurs de pression (54,55) et une valve de by-pass (56).

Le fonctionnement du système de direction est le suivant.

Les deux calculateurs (3,4) de régulation reçoivent chacun des signaux représentatifs de la rotation du volant, et déterminent ainsi la valeur de consigne de l'angle de braquage demandé par le conducteur. Cette détermination peut également effectuer une démultiplication variable, en fonction de différents paramètres. Les calculateurs reçoivent également un signal représentatif de l'angle de braquage réel des roues, via un capteur de déplacement (57) monté au niveau de l'essieu, et associé aux tiges des vérins (11). Comme déjà évoqué, les calculateurs (3,4) reçoivent également un signal représentatif du couple appliqué aux roues, via différents capteurs de pression (32,33,54,55) disposés sur les tubulures alimentant les chambres (7-10) des vérins.

Chaque calculateur (3,4) compare les valeurs réelles et les valeurs de consigne, et assure la commande des valves de distribution de manière à superposer position et effort, afin que l'angle de braquage réel de ces roues coïncide avec l'angle de consigne demandé par le conducteur du véhicule.

Les deux calculateurs sont programmés pour procéder au calcul nécessaire aux asservissements qui sont de nature différente. Ainsi, un des calculateurs est asservi en position, tandis que l'autre est asservi en effort.

D'autres paramètres représentatifs de l'état du véhicule ou de son environnement, tels que la vitesse du véhicule, la vitesse de lacet, etc... peuvent être utilisés par les calculateurs pour optimiser la régulation. Ces paramètres peuvent être acheminés à destination des calculateurs soit par liaison filaire, soit par des médias de communication entre calculateurs.

Ainsi, en mode normal, les deux circuits de direction (20,21) fonctionnent simultanément, l'un d'eux assurant le déplacement du vérin (11) correspondant en étant asservi en déplacement et fournissant une partie de l'effort nécessaire au braquage des roues. L'autre circuit (20) fournit le complément de l'effort nécessaire à l'obtention du déplacement. La superposition de ces deux actions conduit donc au déplacement nécessaire au braquage des roues. Pendant ce mode nornial, les valves de by-pass (45,56) sont fermées.

Dans certains cas de figures, et notamment en ligne droite, c'est-à-dire lorsque les circuits de direction ne sont pas sollicités, les calculateurs (3,4) sont susceptibles de tester le fonctionnement d'une des valves de by-pass (45,56), en l'ouvrant, et en vérifiant que cet ordre d'ouverture a bien été exécuté. Cette opération de test peut s'effectuer pendant le roulage, et à périodes prédéterminées, pour vérifier le bon fonctionnement de chacun des circuits.

En cas de défaillance d'un des circuits, qui peut intervenir par exemple en cas de défaillance du calculateur (3), de la pompe d'alimentation (22), ou bien encore des valves de distribution (251e circuit (21) est neutralisé par un actionnement de la valve de by-pass (45) qui met en communication les deux chambres (7,9) du vérin (11) associé au circuit défaillant. Le circuit (20) qui continue à fonctionner assure alors l'ensemble de l'effort de braquage.

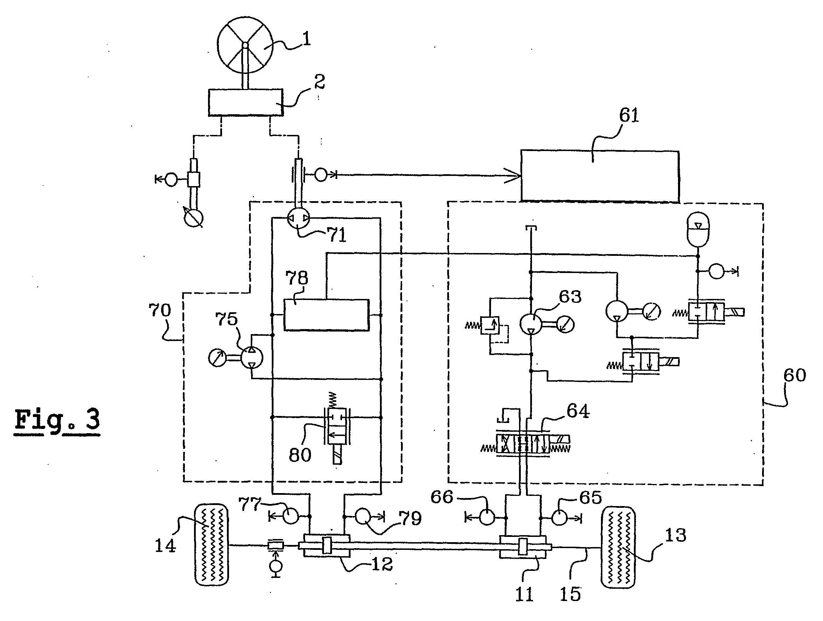

Une autre architecture du système de direction est illustrée à la figure 3. Un premier circuit (60) analogue au circuit (21) de la figure 2 commande un des deux vérins (11) montés sur l'essieu (15). Ce circuit (60) comprend donc un calculateur (61) recevant une information issue d'un capteur (2) situé au niveau du volant (1). Ce circuit (60) comprend également une source d'alimentation en pression (63), ainsi qu'une valve de distribution (64) et deux capteurs de pression (65,66) permettant de déterminer le couple appliqué pour le braquage des roues Cette valve de distribution représentée est une valve à centre ouvert, dimensionnée pour laisser passer en position de repos, le débit nécessaire pour ne pas perturber l'autre circuit.

Bien entendu, de multiples variantes sont envisageables en ce qui concerne l'alimentation en pression de ce circuit, et ce sans sortir du cadre de l'invention.

Par ailleurs, le système de direction comprend également un second circuit (70), de type hydrostatique. Un tel circuit comprend donc une pompe bidirectionnelle (71), actionnée par la rotation du volant (1). En fonction de l'angle du volant, cette pompe (71) fait directement circuler le fluide dans le vérin dans un sens ou dans un autre. Ce circuit comprend également un dispositif supplémentaire, composé d'une pompe hydraulique (75) entraînée à vitesse variable en fonction des différents paramètres relatifs au véhicule, permettant d'obtenir une démultiplication de direction variable. Le débit de cette pompe supplémentaire (75) vient s'ajouter à celui de la pompe bidirectionnelle (71). Des systèmes de compensation des fuites (78) sont également prévus au sein de ce circuit. Ce circuit hydrostatique fonctionne en circuit fermé.

En mode normal, les actions sur les vérins (11,12) se superposent comme dans la description du mode de réalisation de la figure 2. C'est le circuit hydrostatique qui assure une commande asservie en déplacement du vérin (12), puisque l'alimentation du vérin (12) s'effectue directement en fonction de la rotation du volant (1). En outre, le circuit électro-hydraulique (60) fonctionne avec un asservissement en effort, grâce à l'information d'effort (77,79) prélevée au niveau du vérin (12).

Toujours en mode normal, il est possible de tester, en ligne droite par exemple, le fonctionnement de la valve de by-pass (80), en confiant temporairement la gestion de la direction au circuit électro-hydraulique.

En mode dégradé, en cas de défaillance de l'un des circuits, l'autre circuit assure l'intégralité de la gestion de la direction.

Il ressort de ce qui précède que le système de direction conforme à l'invention présente de multiples avantages, et notamment :
- un dimensionnement optimisé pour l'ensemble des composants de circuits de direction, qui assure en mode normal la moitié des efforts chacun ;
- la possibilité d'effectuer des tests d'isolement de chaque circuit de commande, et ce y compris en roulage ;
- l'absence de transition lors du passage en mode dégradé, du fait du fonctionnement continu de chacun des circuits de commande.

## Revendications

1. Système de direction, assurant la commande de l'angle de braquage des roues directrices (13,14) d'un véhicule, comportant :
• des moyens (2) de détermination de la position angulaire du volant (1) ;
• deux circuits hydrauliques ou électro-hydrauliques (6,5) permettant de commander chacun un actionneur (11,12) agissant sur l'angle de braquage des roues (13,14), en fonction de la position angulaire du volant (1) ;
• des moyens pour, en mode normal, faire fonctionner simultanément les deux circuits hydrauliques ou électro-hydrauliques (5,6) ;
**caractérisé en ce qu'**il comporte également des moyens (45,56,80) pour désactiver temporairement à la demande et notamment en roulage l'un ou l'autre des deux circuits hydrauliques ou électro-hydrauliques, pour réaliser des opérations de tests et vérifier le bon fonctionnement de chacun desdits circuits.

2. Système selon la revendication 1, **caractérisé en ce qu'**il comporte deux circuits électro-hydrauliques (20,21).

3. Système selon la revendication 1, **caractérisé en ce qu'**il comporte un circuit hydraulique (70) et un circuit électro-hydraulique (60).

4. Système selon la revendication 2, **caractérisé en ce que** les deux circuits électro-hydrauliques (20,21) comportent chacun un calculateur de régulation (3,4), alimenté par une source d'énergie dédiée (42,51).

5. Système selon la revendication 1, **caractérisé en ce que** les deux actionneurs (11,12) sont asservis, pour l'un en déplacement, et pour l'autre en effort.

6. Système selon la revendication 5, **caractérisé en ce que** les deux actionneurs sont dimensionnés de façon analogue.

7. Système selon la revendication 1, **caractérisé en ce que** les actionneurs sont des vérins double chambre.

8. Système selon la revendication 1, **caractérisé en ce que** les actionneurs (11,12) sont associés en un unique vérin à quatre chambres (7-10).

9. Système selon l'une des revendications 7 ou 8, **caractérisé en ce que** chaque circuit comporte une valve de dérivation (45,56,80) permettant la mise en communication des deux chambres d'un vérin (11,12).

10. Système selon la revendication 1, **caractérisé en ce que** les actionneurs sont du type à commande électrique.

## Claims

1. A steering system that controls the steering lock angle of the steering wheels (13, 14) of a vehicle comprising:
• means (2) of determining the angular position of the steering wheel (1);
• two hydraulic or electrohydraulic circuits (6, 5) each making it possible to control an actuator (11, 12) that alters the steering lock angle of wheels (13, 14) depending on the angular position of steering wheel (1);
• means in order to, in normal mode, simultaneously operate the two hydraulic or electrohydraulic circuits (5, 6);
**characterised in that** it also comprises means (45, 56, 80) of temporarily disabling, on demand, especially whilst moving, one or other of the two hydraulic or electrohydraulic circuits in order to perform test operations and check correct operation of each of said circuits.

2. A system as claimed in claim 1, **characterised in that** it comprises two electrohydraulic circuits (20, 21).

3. A system as claimed in claim 1, **characterised in that** it comprises one hydraulic circuit (70) and one electrohydraulic circuit (60).

4. A system as claimed in claim 2, **characterised in that** the two electrohydraulic circuits (20, 21) each comprise a control computer (3, 4) powered by a dedicated energy source (42, 51).

5. A system as claimed in claim 1, **characterised in that** the two actuators (11, 12) are slaved, one in terms of movement and the other in terms of force.

6. A system as claimed in claim 5, **characterised in that** the two actuators are similarly sized.

7. A system as claimed in claim 1, **characterised in that** the actuators are dual-chamber cylinders.

8. A system as claimed in claim 1, **characterised in that** the actuators (11, 12) are combined as a single cylinder with four chambers (7-10).

9. A system as claimed in either claim 7 or 8, **characterised in that** each circuit comprises a bypass valve (45, 56, 80) allowing the two chambers of one cylinder (11, 12) to communicate with each other.

10. A system as claimed in claim 1, **characterised in that** the actuators are of the electrically controlled type.

## Patentansprüche

1. Lenksystem zur Gewährleistung der Steuerung des Einschlagwinkels der Leiträder (13, 14) eines Fahrzeugs, umfassend:
• Mittel (2) zur Bestimmung der Winkelposition des Lenkrads (1);
• zwei hydraulische oder elektrohydraulische Kreise (6, 5), die es ermöglichen, jeweils ein Stellglied (11, 12) zu steuern, das auf den Einschlagwinkel der Räder (13, 14) einwirkt, und zwar in Abhängigkeit von der Winkelposition des Lenkrads (1);
• Mittel, um im Normalmodus die beiden hydraulischen oder elektrohydraulischen Kreise (5, 6) gleichzeitig zu betreiben;
**dadurch gekennzeichnet, dass** es auch Mittel (45, 56, 80) umfasst, um auf Verlangen und insbesondere während der Fahrt den einen oder den anderen der beiden hydraulischen oder elektrohydraulischen Kreise vorübergehend zu deaktivieren, um Testvorgänge durchzuführen und das ordnungsgemäße Funktionieren jedes der Kreise zu überprüfen.

2. System nach Anspruch 1, **dadurch gekennzeichnet, dass** es zwei elektrohydraulische Kreise (20, 21) umfasst.

3. System nach Anspruch 1, **dadurch gekennzeichnet, dass** es einen hydraulischen Kreis (70) und einen elektrohydraulischen Kreis (60) umfasst.

4. System nach Anspruch 2, **dadurch gekennzeichnet, dass** die zwei elektrohydraulischen Kreise (20, 21) jeweils einen Regelungsrechner (3, 4) umfassen, der durch eine eigene Energiequelle (42, 51) gespeist wird.

5. System nach Anspruch 1, **dadurch gekennzeichnet, dass** von den zwei Stellgliedern (11, 12) eines hinsichtlich der Bewegung und das andere hinsichtlich der Kraft geregelt wird.

6. System nach Anspruch 5, **dadurch gekennzeichnet, dass** die zwei Stellglieder auf analoge Weise dimensioniert sind.

7. System nach Anspruch 1, **dadurch gekennzeichnet, dass** die Stellglieder Doppelkammerzylinder sind.

8. System nach Anspruch 1, **dadurch gekennzeichnet, dass** die Stellglieder (11, 12) in einem einzigen Zylinder mit vier Kammern (7 - 10) zusammengefasst sind.

9. System nach einem der Ansprüche 7 oder 8, **dadurch gekennzeichnet, dass** jeder Kreis ein Abzweigventil (45, 56, 80) umfasst, das es ermöglicht, die beiden Kammern eines Zylinders (11, 12) miteinander in Verbindung zu bringen.

10. System nach Anspruch 1, **dadurch gekennzeichnet, dass** die Stellglieder vom Typ mit elektrischer Steuerung sind.
